# FASCICULE DE BREVET EUROPEEN

(11) **EP 4 063 255 B1**
(45) Date de publication et mention de la délivrance du brevet: **03.05.2023**
(21) Numéro de dépôt: 22152944.9
(22) Date de dépôt: 24.01.2022
(51) Int. Cl.: B64C 1/14, B64C 7/00, B64C 7/02, B64D 27/26, B64D 29/00, B64D 29/06, B64D 29/08, E05D 1/02

(54) **CARÉNAGE D'AÉRONEF COMPRENANT AU MOINS UNE ARTICULATION SOUPLE RELIANT UN PANNEAU FIXE ET UN PANNEAU MOBILE**
LUFTFAHRZEUGVERKLEIDUNG MIT MINDESTENS EINEM FLEXIBLEN GELENK, DAS EINE FESTE UND EINE BEWEGLICHE PLATTE VERBINDET
AIRCRAFT FAIRING COMPRISING AT LEAST ONE FLEXIBLE JOINT LINKING A FIXED PANEL AND A MOBILE PANEL

(30) Priorité: 25.03.2021 FR 2102980
(43) Date de publication de la demande: 28.09.2022
(73) Titulaire: Airbus Operations (S.A.S.), 31060 Toulouse Cedex 9 (FR)
(72) Inventeur: THERON, Thierry, 31060 TOULOUSE (FR); GELIOT, Jean, 31060 TOUOUSE (FR)
(74) Mandataire: Jardel, Marc Henry Philippe

(56) Documents cités:
- FR-A1- 3 079 216
- US-A1- 2014 007 376
- US-A1- 2017 044 808
- US-B2- 6 719 354

## Description

La présente demande se rapporte à un carénage d'aéronef comprenant au moins une articulation souple reliant un panneau fixe et un panneau mobile.

Le document FR 3 079 216 A1 divulgue un carénage d'aéronef avec une articulation de type charnière (sans bras) reliant un panneau fixe et un panneau mobile. Les documents US 6 719 354 B2, US 2017/0044808 A1 et US 2014/0007376 A1 divulguent chacun un charnière avec un élément flexible.

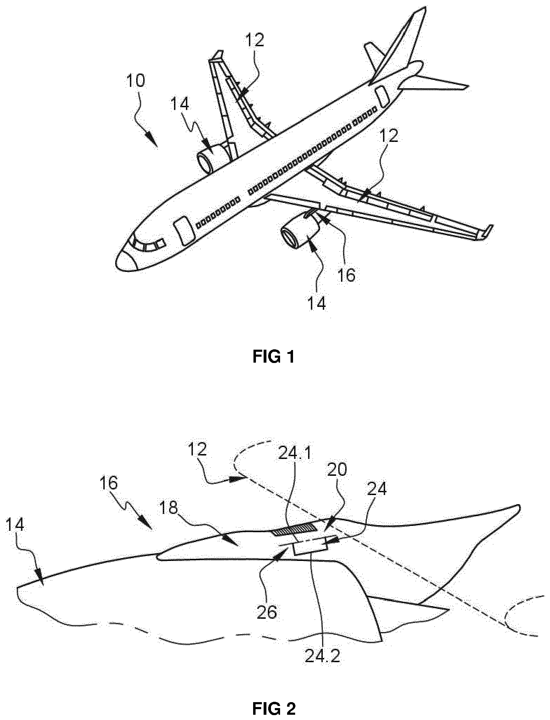

Selon les figures 1 et 2, un aéronef 10 comprend des ailes 12, plusieurs ensembles moteurs 14, positionnés sous les ailes 12 ainsi que des mâts 16 reliant chaque ensemble moteur à une des ailes 12.

Chaque mât 16 comprend une structure primaire rigide, qui assure entre autres la transmission des efforts entre l'ensemble moteur 14 et l'aile 12, ainsi qu'une structure secondaire qui enveloppe la structure primaire et limite la traînée du mât 16.

Cette structure secondaire comprend un carénage avant 18, positionné à l'avant de l'aile 12, un carénage central, positionné sous l'aile 12, ainsi qu'un carénage arrière, appelé carénage aérodynamique arrière inférieur ou APF (« Aft Pylon Fairing » en anglais), positionné à l'arrière de l'ensemble moteur 14.

Ce carénage avant 18 comprend au moins un panneau fixe 20 présentant une ouverture 22 ainsi qu'un panneau mobile 24 configuré pour occuper une position fermée dans laquelle le panneau mobile 24 obture l'ouverture 22 et une position ouverte dans laquelle le panneau mobile 24 dégage, au moins partiellement, l'ouverture 22. Le carénage avant 18 comprend une charnière 26 reliant un premier bord 24.1 du panneau mobile 24 et le panneau fixe 20.

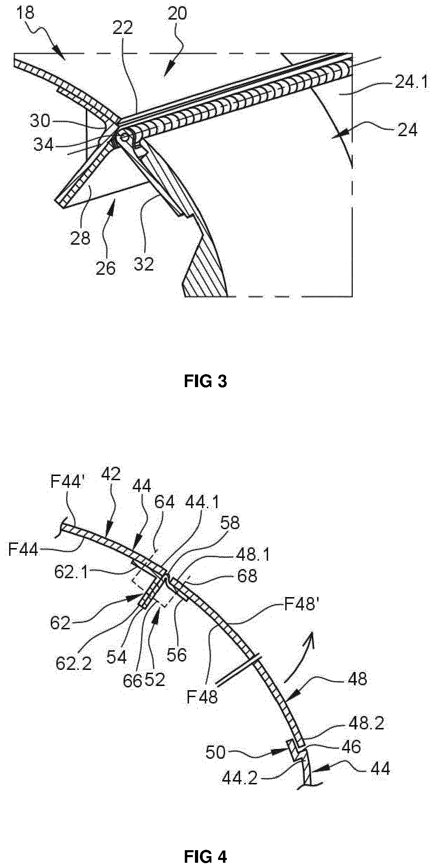

Selon la figure 3, cette charnière 26 comprend une première aile 28 reliée au panneau fixe 20 par l'intermédiaire d'une cornière 30, au moins une deuxième aile 32 reliée au panneau mobile 24 ainsi qu'un axe 34 reliant les première et deuxième ailes 28, 32 de manière à obtenir une liaison pivot. En complément de la charnière 26, le carénage avant 18 comprend au moins un système de verrouillage (distinct de la charnière) pour maintenir le panneau mobile 24 dans la position fermée, positionné au niveau d'un deuxième bord 24.2 sensiblement parallèle et espacé du premier bord 24.1 du panneau mobile 24. Cette charnière 26, réalisée en matériau métallique, est sujette à la corrosion et à des vibrations.

La présente invention vise à proposer une alternative à cette charnière, permettant de réduire la masse embarquée.

A cet effet, l'invention a pour objet un carénage d'aéronef comprenant :
- au moins un panneau fixe présentant au moins une ouverture,
- au moins un panneau mobile configuré pour occuper une position fermée dans laquelle le panneau mobile obture l'ouverture et une position ouverte dans laquelle le panneau mobile dégage, au moins partiellement, l'ouverture,
- au moins une articulation reliant le panneau fixe et le panneau mobile, ladite articulation comportant au moins une première aile reliée au panneau fixe, au moins une deuxième aile reliée au panneau mobile ainsi qu'une zone de jonction reliant les première et deuxième ailes, chacune des première et deuxième ailes comprenant un premier bord relié à la zone de jonction ainsi qu'un deuxième bord libre, distant de la zone de jonction.

Selon l'invention, la zone de jonction est configurée pour se déformer de manière élastique et les première et deuxième ailes ainsi que la zone de jonction forment une unique et même pièce. Selon l'invention, au moins une aile parmi les première et deuxième ailes comprend au moins deux secteurs séparés par une découpe qui s'étend du deuxième bord libre jusqu'au premier bord.

Cette solution permet de réduire la masse de l'articulation et donc la masse embarquée de l'aéronef.

Selon une autre caractéristique, l'articulation est configurée pour occuper un état stable dans lequel les première et deuxième ailes forment entre elles un premier angle en l'absence de contraintes et un état déformé élastiquement dans lequel les première et deuxième ailes forment un deuxième angle, différent du premier angle en présence d'une contrainte tendant à modifier l'angle formé entre les première et deuxième ailes, l'articulation revenant automatiquement dans l'état stable lorsque la contrainte disparaît.

Selon une autre caractéristique, l'articulation est configurée de manière à être dans l'état stable lorsque le panneau mobile est dans la position fermée.

Selon une autre caractéristique, le carénage comprend une cornière en L qui présente un premier pan plaqué contre le panneau fixe et relié à ce dernier ainsi qu'un deuxième pan, la première aile de l'articulation étant plaquée contre le deuxième pan de la cornière en L et reliée à ce dernier.

Selon une autre caractéristique, l'articulation comprend au moins une languette présentant une première extrémité solidaire de la deuxième aile de l'articulation ainsi qu'une deuxième extrémité libre, la languette étant configurée pour occuper un état de maintien dans lequel la deuxième extrémité coopère avec la première aile et/ou le deuxième pan de la cornière en L, empêchant un basculement du panneau mobile de la position fermée vers la position ouverte, ainsi qu'un état libre dans lequel la deuxième extrémité est dépourvue de contact avec la première aile et/ou le deuxième pan de la cornière en L.

Selon une autre caractéristique, la première aile et le deuxième pan de la cornière en L comprennent chacun un chant. En complément, la languette présente un profil en Z et comprend un premier segment d'extrémité plaqué contre la deuxième aile et relié à cette dernière, un segment intermédiaire sensiblement parallèle à la première aile ainsi qu'un deuxième segment d'extrémité configuré pour coopérer avec un chant de la première aile et/ou du deuxième pan de la cornière en L.

Selon une autre caractéristique de l'invention, au moins une aile parmi les première et deuxième ailes est insérée au moins partiellement dans le panneau fixe ou mobile.

L'invention a également pour objet un aéronef comportant un carénage selon l'une des caractéristiques précédentes.

D'autres caractéristiques et avantages ressortiront de la description de l'invention qui va suivre, description donnée à titre d'exemple uniquement, en regard des dessins annexés parmi lesquels :
la figure 1 est une vue en perspective d'un aéronef,
la figure 2 est une vue en perspective d'une partie d'un mât de l'aéronef visible sur la figure 1,
la figure 3 est une coupe en perspective d'une charnière reliant un panneau mobile et un panneau fixe illustrant un mode de réalisation de l'art antérieur,
la figure 4 est une coupe d'un panneau mobile relié à un panneau fixe par une articulation souple illustrant un mode de réalisation de l'invention,
la figure 5 est une coupe en perspective de l'articulation souple visible sur la figure 4,
la figure 6 est une coupe en perspective d'une articulation souple reliant un panneau fixe et un panneau mobile illustrant un autre mode de réalisation de l'invention,
la figure 7 est une vue en perspective d'une articulation souple illustrant un mode de réalisation de l'invention,
la figure 8 est une coupe d'une articulation souple illustrant un autre mode de réalisation de l'invention,
la figure 9 est une coupe d'une articulation souple reliant un panneau fixe et un panneau mobile illustrant un mode de réalisation de l'invention, et
la figure 10 est une représentation schématique d'un panneau mobile dans les positions fermée et ouverte, relié par l'articulation souple visible sur la figure 9 à un panneau fixe illustrant un mode de réalisation de l'invention.

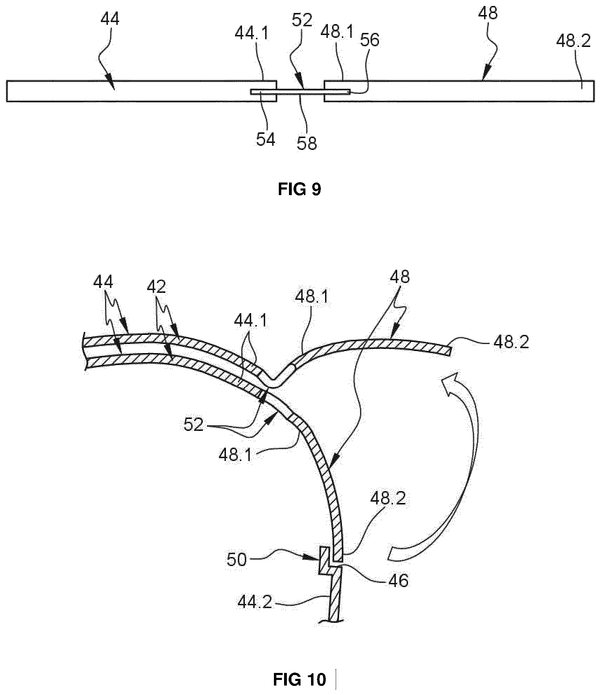

Sur les figures 4 et 10, un carénage 42 d'un aéronef comprend au moins un panneau fixe 44 qui présente au moins une ouverture 46, au moins un panneau mobile 48 configuré pour occuper une position fermée dans laquelle il obture l'ouverture 46 et une position ouverte dans laquelle il dégage au moins partiellement l'ouverture 46.

Le panneau mobile 48 comprend un contour sensiblement identique au contour de l'ouverture 46. Il comprend un premier bord 48.1 relié au panneau fixe 44 ainsi qu'un deuxième bord 48.2 distant du premier bord 48.1. En complément, le panneau fixe 44 comprend un premier bord 44.1 qui jouxte le premier bord 48.1 du panneau mobile 48 ainsi qu'un deuxième bord 44.2 qui jouxte le deuxième bord 48.2 du panneau mobile 48 dans la position fermée.

Selon une configuration, les contours du panneau mobile 48 et de l'ouverture 46 sont approximativement rectangulaires et, pour chacun d'eux, les premier et deuxième bords 48.1, 48.2 sont sensiblement parallèles et opposés.

Les panneaux fixe et mobile 44, 48 peuvent ne pas être plats et présenter une courbure. De même, le panneau fixe ou mobile 44 peut comprendre plusieurs parties juxtaposées et reliées entre elles.

Selon une configuration, le deuxième bord 44.2 du panneau fixe 44 comprend une butée 50 contre laquelle est plaqué le panneau mobile 48 dans la position fermée.

Selon une application, le carénage 42 correspond à une partie d'une structure secondaire d'un mât d'aéronef. Bien entendu, l'invention n'est pas limitée à cette application, le carénage 42 pouvant correspondre à toute autre partie du carénage d'un aéronef.

Chacun des panneaux fixe et mobile 44, 48 comprend une première face F44, F48, orientée vers l'intérieur de l'aéronef, ainsi qu'une deuxième face F44', F48' orientée vers l'extérieur de l'aéronef.

Le carénage 42 comprend au moins une articulation 52 reliant le panneau fixe 44 et le panneau mobile 48 et plus particulièrement les premiers bords 44.1, 48.1 des panneaux fixe et mobile 44, 48.

Cette articulation 52 comprend au moins une première aile 54 reliée au panneau fixe 44, au moins une deuxième aile 56 reliée au panneau mobile 48 ainsi qu'une zone de jonction 58 déformable de manière élastique, reliant les première et deuxième ailes 54, 56, les première et deuxième ailes 54, 56 ainsi que la zone de jonction 58 ne formant qu'une unique et même pièce. Cette solution permet de réduire la masse de l'articulation 52 et donc la masse embarquée de l'aéronef.

Chacune des première et deuxième ailes 54, 56 comprend un premier bord 54.1, 56.1 relié à la zone de jonction 58 ainsi qu'un deuxième bord 54.2, 56.2 libre, sensiblement parallèle au premier bord 54.1, 56.1 et distant de la zone de jonction 58.

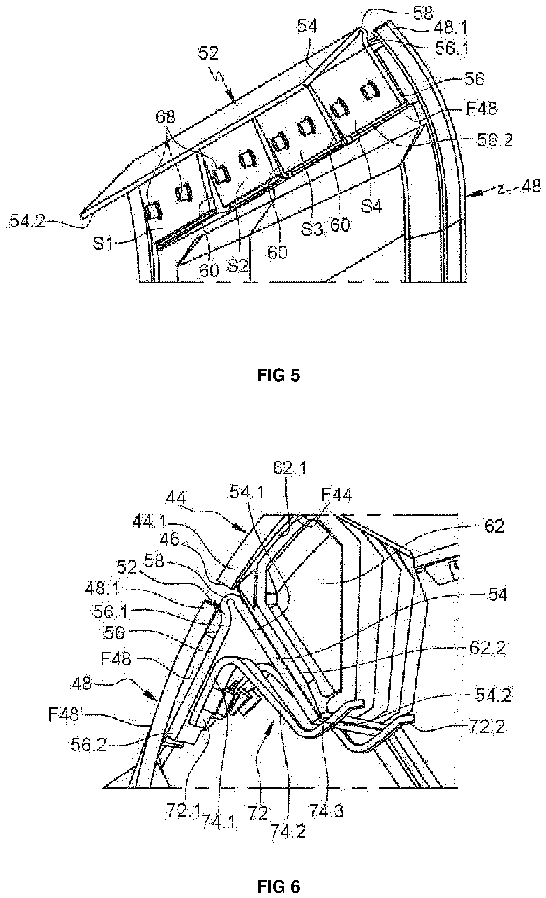

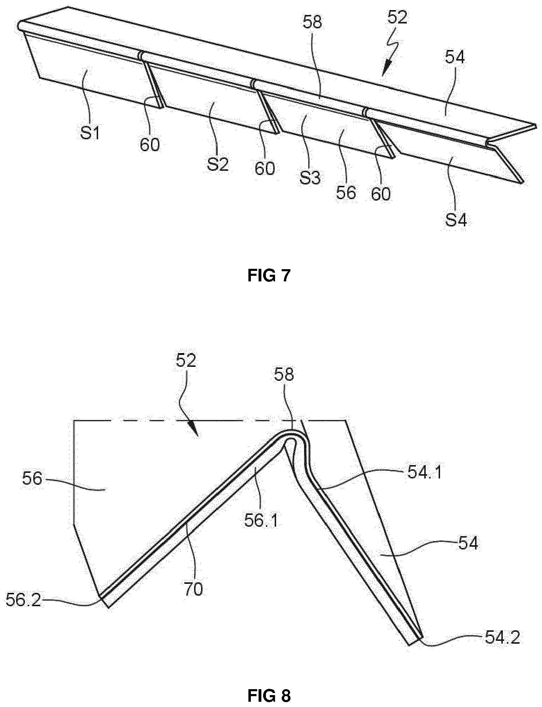

Selon un mode de réalisation visible sur les figures 5 et 7, au moins une aile parmi les première et deuxième ailes 54, 56 comprend au moins deux secteurs S1, S2 séparés par une découpe 60 qui s'étend du deuxième bord 54.2, 56.2 jusqu'au premier bord 54.1, 56.1. Cette solution permet d'adapter la forme de la première ou deuxième aile 54, 56 à la courbure du panneau fixe ou mobile 44, 48. Selon une configuration visible sur les figures 5 et 7, la deuxième aile 56 comprend quatre secteurs S1 à S4.

Selon l'invention, et visible sur les figures 4 et 6, la première aile 54 est indirectement reliée au panneau fixe 44. Selon ce mode de réalisation, le carénage 42 comprend une cornière en L 62 qui présente un premier pan 62.1 plaqué contre la première face F44 du panneau fixe 44 et relié à ce dernier par au moins une première liaison 64 ainsi qu'un deuxième pan 62.2 sensiblement perpendiculaire au panneau fixe 44, positionné approximativement à l'aplomb du premier bord 44.1 du panneau fixe 44, la première aile 54 de l'articulation 52 étant plaquée contre le deuxième pan 62.2 de la cornière en L 62 et reliée à ce dernier par au moins une deuxième liaison 66.

Selon un mode de réalisation, la première liaison 64 comprend une pluralité de boulons ou de rivets répartis le long du premier bord 44.1 du panneau fixe 44. En variante, la première liaison 64 pourrait être obtenue par collage ou toute autre technique analogue. De plus, la première aile 54 de l'articulation 52 pourrait être directement reliée au panneau fixe 44 en étant plaquée contre sa première face F44 et reliée à cette dernière.

Selon un mode de réalisation, la deuxième liaison 66 comprend une pluralité de boulons ou de rivets répartis le long du premier bord 44.1 du panneau fixe 44. En variante, la deuxième liaison 66 pourrait être obtenue par collage ou toute autre technique analogue.

Selon un mode de réalisation visible sur les figures 4 et 5, la deuxième aile 56 de l'articulation 52 est directement reliée au panneau mobile 48. Ainsi, la deuxième aile 56 est plaquée contre la première face F48 du panneau mobile 48 et reliée à ce dernier par au moins une troisième liaison 68. Selon une configuration, cette troisième liaison 68 comprend une pluralité de boulons ou de rivets répartis le long du premier bord 48.1 du panneau mobile 48. En variante, la troisième liaison 68 pourrait être obtenue par collage ou toute autre technique analogue.

Selon un autre mode de réalisation, au moins une aile parmi les première et deuxième ailes 54, 56 est insérée, au moins partiellement, dans le panneau fixe ou mobile 44, 48. Selon ce mode de réalisation, les panneaux fixe et mobile 44, 48 sont réalisés en matériau composite chacun à partir d'une préforme de plis superposés de la première face F44, F48 vers la deuxième face F44', F48'. Lors de la superposition des plis de fibres, la première ou deuxième aile 54, 56 est positionnée entre deux plis de la préforme du panneau fixe ou mobile 44,48. Après polymérisation ou consolidation, on obtient une liaison résistante entre la première ou deuxième aile 54, 56 et le panneau fixe ou mobile 44, 48. A titre d'exemple, chaque panneau fixe ou mobile 44, 48 a une épaisseur de l'ordre de 3 mm et l'articulation 52 présente une épaisseur de l'ordre de 0,3 mm.

Selon une première variante, les première et deuxième ailes 54, 56 sont respectivement insérées dans les panneaux fixe et mobile 44, 48. Selon une autre variante, seule l'une des première et deuxième ailes 54, 56 est insérée dans l'un des panneaux fixe et mobile 44, 48.

Bien entendu, l'invention n'est pas limitée aux modes de réalisation précédemment décrits pour les liaisons entre l'articulation 52 et les panneaux fixe et mobile 44, 48.

L'articulation 52 est réalisée en un matériau élastique. Selon un premier mode de réalisation, l'articulation 52 est métallique, par exemple en acier à ressort. Selon un deuxième mode de réalisation visible sur la figure 8, l'articulation 52 est en matériau composite et comprend un renfort 70 dans son épaisseur, par exemple une couche ou un pli en kevlar.

Selon un mode de réalisation, l'articulation 52 est configurée pour occuper un état stable dans lequel les première et deuxième ailes 54, 56 forment entre elles un premier angle en l'absence de contraintes et un état déformé élastiquement dans lequel les première et deuxième ailes 54, 56 forment un deuxième angle, différent du premier angle, en présence d'une contrainte tendant à modifier l'angle formé entre les première et deuxième ailes 54, 56, l'articulation 52 revenant automatiquement dans l'état stable lorsque la contrainte disparaît.

Selon une configuration, l'articulation 52 est configurée de manière à être dans l'état stable lorsque le panneau mobile 48 est dans la position fermée. Lorsqu'un effort d'ouverture est exercé pour basculer le panneau mobile 48 dans la position ouverte, l'articulation 52 se déforme de manière élastique et passe à l'état déformé élastiquement. Selon cette configuration, l'articulation assure également la fonction de maintien du panneau mobile 48 dans la position fermée.

En variante, l'articulation 52 est configurée de manière à être dans l'état sable lorsque le panneau mobile 48 est dans la position ouverte.

Selon une configuration visible sur la figure 9, à l'état stable, le premier angle est de l'ordre de 180° et les première et deuxième ailes 54, 56 sont approximativement coplanaires. Selon une autre configuration visible sur les figures 5 à 7, à l'état stable, le premier angle formé entre les première et deuxième ailes est inférieur ou égal à 90°.

Selon un mode de réalisation visible sur la figure 6, l'articulation 52 comprend au moins un système de maintien du panneau mobile 48 dans la position fermée.

Ce système de maintien comprend au moins une languette 72 qui présente une première extrémité 72.1 solidaire de la deuxième aile 56 de l'articulation 52 ainsi qu'une deuxième extrémité 72.2 libre, la languette 72 étant configurée pour occuper un état de maintien, correspondant à la position fermée du panneau mobile 48, dans lequel la deuxième extrémité 72.2 coopère avec la première aile 54 et/ou le deuxième pan 62.2 de la cornière en L 62 ainsi qu'un état libre, correspondant à la position ouverte du panneau mobile 48, dans lequel la deuxième extrémité 72.2 est libre, c'est-à-dire que la deuxième extrémité 72.2 est dépourvue de contact avec la première aile 54 et/ou le deuxième pan 62.2 de la cornière en L 62. Dans l'état libre, la languette 72 autorise la déformation de l'articulation 52. Dans l'état de maintien, la languette 72 empêche la déformation de l'articulation 52 ou accroît l'effort nécessaire pour initier le mouvement de basculement du panneau mobile 48 de la position fermée vers la position ouverte.

Selon une configuration, la languette 72 présente un profil en Z et comprend un premier segment d'extrémité 74.1 plaqué contre la deuxième aile 56 et relié à cette dernière, un segment intermédiaire 74.2 sensiblement parallèle à la première aile 54 ainsi qu'un deuxième segment d'extrémité 74.3 configuré pour coopérer avec le chant de la première aile 54 et/ou du deuxième pan 62.2 de la cornière en L 62. Ainsi, lorsque le deuxième segment d'extrémité 74.3 coopère avec le chant de la première aile 54 et/ou du deuxième pan 62.2 de la cornière en L 62, la languette 72 empêche ou rend plus difficile le basculement du panneau mobile 48 de la position fermée vers la position ouverte. Lorsque le deuxième segment d'extrémité 74.3 ne coopère plus avec le chant de la première aile 54 et/ou du deuxième pan 62.2 de la cornière en L 62 après un léger basculement du panneau mobile 48, alors la languette 72 n'impose plus d'effort supplémentaire pour ouvrir le panneau mobile 48.

La languette 72 est configurée pour se déformer de manière élastique lors d'un passage l'état de maintien à l'état libre ou inversement. La languette 72 permet également d'assurer le placage du panneau mobile 48 en position fermée et de garantir le désaffleurement aérodynamique.

Bien entendu, l'invention n'est pas limitée à ce mode de réalisation pour le système de maintien du panneau mobile 48 dans la position fermée.

## Revendications

1. Carénage d'aéronef comprenant :
- au moins un panneau fixe (44) présentant au moins une ouverture (46),
- au moins un panneau mobile (48) configuré pour occuper une position fermée dans laquelle le panneau mobile (48) obture l'ouverture (46) et une position ouverte dans laquelle le panneau mobile (48) dégage, au moins partiellement, l'ouverture (46),
- au moins une articulation (52) reliant le panneau fixe (44) et le panneau mobile (48), ladite articulation (52) comportant au moins une première aile (54) reliée au panneau fixe (44), au moins une deuxième aile (56) reliée au panneau mobile (48) ainsi qu'une zone de jonction (58) reliant les première et deuxième ailes (54, 56), chacune des première et deuxième ailes (54, 56) comprenant un premier bord (54.1, 56.1) relié à la zone de jonction (58) ainsi qu'un deuxième bord (54.2, 56.2) libre, distant de la zone de jonction (58) ;
**caractérisé en ce que** la zone de jonction (58) est configurée pour se déformer de manière élastique, **en ce que** les première et deuxième ailes (54, 56) ainsi que la zone de jonction (58) forment une unique et même pièce, et **en ce qu'**au moins une aile parmi les première et deuxième ailes (54, 56) comprend au moins deux secteurs (S1, S2) séparés par une découpe (60) qui s'étend du deuxième bord (54.2, 56.2) libre jusqu'au premier bord (54.1, 56.1).

2. Carénage d'aéronef selon la revendication précédente, **caractérisé en ce que** l'articulation (52) est configurée pour occuper un état stable dans lequel les première et deuxième ailes (54, 56) forment entre elles un premier angle en l'absence de contraintes et un état déformé élastiquement dans lequel les première et deuxième ailes (54, 56) forment un deuxième angle, différent du premier angle en présence d'une contrainte tendant à modifier l'angle formé entre les première et deuxième ailes (54, 56), l'articulation (52) revenant automatiquement dans l'état stable lorsque la contrainte disparaît.

3. Carénage d'aéronef selon la revendication précédente, **caractérisé en ce que** l'articulation (52) est configurée de manière à être dans l'état stable lorsque le panneau mobile (48) est dans la position fermée.

4. Carénage d'aéronef selon l'une des revendications précédentes, **caractérisé en ce que** le carénage comprend une cornière en L (62) qui présente un premier pan (62.1) plaqué contre le panneau fixe (44) et relié à ce dernier ainsi qu'un deuxième pan (62.2) et **en ce que** la première aile (54) de l'articulation (52) est plaquée contre le deuxième pan (62.2) de la cornière en L (62) et reliée à ce dernier.

5. Carénage d'aéronef selon la revendication précédente, **caractérisé en ce que** l'articulation (52) comprend au moins une languette (72) présentant une première extrémité (72.1) solidaire de la deuxième aile (56) de l'articulation (52) ainsi qu'une deuxième extrémité (72.2) libre, la languette (72) étant configurée pour occuper un état de maintien dans lequel la deuxième extrémité (72.2) coopère avec la première aile (54) et/ou le deuxième pan (62.2) de la cornière en L (62), empêchant un basculement du panneau mobile (48) de la position fermée vers la position ouverte, ainsi qu'un état libre dans lequel la deuxième extrémité (72.2) est dépourvue de contact avec la première aile (54) et/ou le deuxième pan (62.2) de la cornière en L (62).

6. Carénage d'aéronef selon la revendication précédente, **caractérisé en ce que** la première aile (54) et le deuxième pan (62.2) de la cornière en L (62) comprennent chacun un chant et **en ce que** la languette (72) présente un profil en Z et comprend un premier segment d'extrémité (74.1) plaqué contre la deuxième aile (56) et relié à cette dernière, un segment intermédiaire (74.2) sensiblement parallèle à la première aile (54) ainsi qu'un deuxième segment d'extrémité (74.3) configuré pour coopérer avec le chant de la première aile (54) et/ou du deuxième pan (62.2) de la cornière en L (62).

7. Carénage d'aéronef selon l'une des revendications précédentes, **caractérisé en ce qu'**au moins une aile parmi les première et deuxième ailes (54, 56) est insérée au moins partiellement dans le panneau fixe ou mobile (44, 48).

8. Aéronef comportant un carénage selon l'une des revendications précédentes.

## Patentansprüche

1. Luftfahrzeugverkleidung, welche umfasst:
- wenigstens eine feste Platte (44), die wenigstens eine Öffnung (46) aufweist,
- wenigstens eine bewegliche Platte (48), die dafür ausgelegt ist, eine geschlossene Position, in welcher die bewegliche Platte (48) die Öffnung (46) verschließt, und eine geöffnete Position, in welcher die bewegliche Platte (48) die Öffnung (46) wenigstens teilweise freigibt, einzunehmen,
- wenigstens ein Gelenk (52), das die feste Platte (44) und die bewegliche Platte (48) verbindet, wobei das Gelenk (52) wenigstens einen ersten Schenkel (54), der mit der festen Platte (44) verbunden ist, wenigstens einen zweiten Schenkel (56), der mit der beweglichen Platte (48) verbunden ist, sowie einen Verbindungsbereich (58), der den ersten und den zweiten Schenkel (54, 56) verbindet, aufweist, wobei der erste und der zweite Schenkel (54, 56) jeweils einen ersten Rand (54.1, 56.1), der mit dem Verbindungsbereich (58) verbunden ist, sowie einen freien zweiten Rand (54.2, 56.2), der vom Verbindungsbereich (58) entfernt ist, umfassen;
**dadurch gekennzeichnet, dass** der Verbindungsbereich (58) dafür ausgelegt ist, sich elastisch zu verformen, dadurch, dass der erste und der zweite Schenkel (54, 56) sowie der Verbindungsbereich (58) ein einziges Teil bilden, und dadurch, dass wenigstens ein Schenkel von dem ersten und dem zweiten Schenkel (54, 56) wenigstens zwei Sektoren (S1, S2) umfasst, die durch einen Ausschnitt (60) getrennt sind, welcher sich vom freien zweiten Rand (54.2, 56.2) bis zum ersten Rand (54.1, 56.1) erstreckt.

2. Luftfahrzeugverkleidung nach dem vorhergehenden Anspruch, **dadurch gekennzeichnet, dass** das Gelenk (52) dafür ausgelegt ist, einen stabilen Zustand, in welchem der erste und der zweite Schenkel (54, 56) einen ersten Winkel miteinander bilden, bei Nichtvorhandensein von Belastungen einzunehmen und einen elastisch verformten Zustand, in welchem der erste und der zweite Schenkel (54, 56) einen vom ersten Winkel verschiedenen zweiten Winkel bilden, bei Vorhandensein einer Belastung, die bestrebt ist, den zwischen dem ersten und dem zweiten Schenkel (54, 56) gebildeten Winkel zu ändern, wobei das Gelenk (52) automatisch in den stabilen Zustand zurückkehrt, wenn die Belastung verschwindet.

3. Luftfahrzeugverkleidung nach dem vorhergehenden Anspruch, **dadurch gekennzeichnet, dass** das Gelenk (52) so ausgebildet ist, dass es sich im stabilen Zustand befindet, wenn sich die bewegliche Platte (48) in der geschlossenen Position befindet.

4. Luftfahrzeugverkleidung nach einem der vorhergehenden Ansprüche, **dadurch gekennzeichnet, dass** die Verkleidung ein L-förmiges Winkelelement (62) umfasst, welches eine erste Fläche (62.1), die gegen die feste Platte (44) gepresst wird und mit dieser Letzteren verbunden ist, sowie eine zweite Fläche (62.2) aufweist, und dadurch, dass der erste Schenkel (54) des Gelenks (52) gegen die zweite Fläche (62.2) des L-förmigen Winkelelements (62) gepresst wird und mit dieser Letzteren verbunden ist.

5. Luftfahrzeugverkleidung nach dem vorhergehenden Anspruch, **dadurch gekennzeichnet, dass** das Gelenk (52) wenigstens eine Zunge (72) umfasst, die ein erstes Ende (72.1), das mit dem zweiten Schenkel (56) des Gelenks (52) fest verbunden ist, sowie ein freies zweites Ende (72.2) aufweist, wobei die Zunge (72) dafür ausgelegt ist, einen Haltezustand einzunehmen, in welchem das zweite Ende (72.2) mit dem ersten Schenkel (54) und/oder der zweiten Fläche (62.2) des L-förmigen Winkelelements (62) zusammenwirkt und dabei eine Kippbewegung der beweglichen Platte (48) aus der geschlossenen Position in Richtung der geöffneten Position verhindert, sowie einen freien Zustand, in welchem das zweite Ende (72.2) keinen Kontakt mit dem ersten Schenkel (54) und/oder der zweiten Fläche (62.2) des L-förmigen Winkelelements (62) hat.

6. Luftfahrzeugverkleidung nach dem vorhergehenden Anspruch, **dadurch gekennzeichnet, dass** der erste Schenkel (54) und die zweite Fläche (62.2) des L-förmigen Winkelelements (62) jeweils eine Schmalseite umfassen, und dadurch, dass die Zunge (72) ein Z-förmiges Profil aufweist und ein erstes Endsegment (74.1), das gegen den zweiten Schenkel (56) gepresst wird und mit diesem Letzteren verbunden ist, ein Zwischensegment (74.2), das im Wesentlichen parallel zum ersten Schenkel (54) ist, sowie ein zweites Endsegment (74.3), das dafür ausgelegt ist, mit der Schalseite des ersten Schenkels (54) und/oder der zweiten Fläche (62.2) des L-förmigen Winkelelements (62) zusammenzuwirken, umfasst.

7. Luftfahrzeugverkleidung nach einem der vorhergehenden Ansprüche, **dadurch gekennzeichnet, dass** wenigstens ein Schenkel von dem ersten und dem zweiten Schenkel (54, 56) wenigstens teilweise in die feste oder die bewegliche Platte (44, 48) eingesetzt ist.

8. Luftfahrzeug, welches eine Verkleidung nach einem der vorhergehenden Ansprüche aufweist.

## Claims

1. Aircraft fairing comprising:
- at least one fixed panel (44) having at least one opening (46),
- at least one movable panel (48) that is configured to occupy a closed position in which the movable panel (48) blocks the opening (46) and an open position in which the movable panel (48) at least partially frees the opening (46),
- at least one joint (52) connecting the fixed panel (44) to the movable panel (48), said joint (52) comprising at least one first flange (54) that is connected to the fixed panel (44), at least one second flange (56) that is connected to the movable panel (48), and a junction region (58) connecting the first and second flanges (54, 56), each one of the first and second flanges (54, 56) comprising a first edge (54.1, 56.1) that is connected to the junction region (58) and a second, free edge (54.2, 56.2) that is remote from the junction region (58);
**characterized in that** the junction region (58) is configured to deform elastically, **in that** the first and second flanges (54, 56) and the junction region (58) form a single part, and **in that** at least one of the first and second flanges (54, 56) comprises at least two sectors (S1, S2) that are separated by a cut (60) which extends from the free second edge (54.2, 56.2) to the first edge (54.1, 56.1).

2. Aircraft fairing according to the preceding claim, **characterized in that** the joint (52) is configured such that, in the absence of applied loads, it adopts a stable state in which the first and second flanges (54, 56) enclose a first angle between them and, when subjected to a load tending to change the angle between the first and second flanges (54, 56), it adopts an elastically deformed state in which the first and second flanges (54, 56) enclose a second angle that is different from the first angle, the joint (52) automatically returning to the stable state when the load is removed.

3. Aircraft fairing according to the preceding claim, **characterized in that** the joint (52) is configured to be in the stable state when the movable panel (48) is in the closed position.

4. Aircraft fairing according to one of the preceding claims, **characterized in that** the fairing comprises an L-shaped bracket (62) which has a first web (62.1) that is pressed flat against and is connected to the fixed panel (44), and a second web (62.2), and **in that** the first flange (54) of the joint (52) is pressed flat against and connected to the second web (62.2) of the L-shaped bracket (62).

5. Aircraft fairing according to the preceding claim, **characterized in that** the joint (52) comprises at least one tab (72) having a first end (72.1) that is secured to the second flange (56) of the joint (52) and a second, free end (72.2), the tab (72) being configured to adopt a holding state in which the second end (72.2) cooperates with the first flange (54) and/or the second web (62.2) of the L-shaped bracket (62), preventing the movable panel (48) from tipping from the closed position to the open position, and a free state in which the second end (72.2) is not in contact with the first flange (54) and/or the second web (62.2) of the L-shaped bracket (62).

6. Aircraft fairing according to the preceding claim, **characterized in that** the first flange (54) and the second web (62.2) of the L-shaped bracket (62) each have an edge face, and **in that** the tab (72) has a Z-shaped profile and comprises a first end segment (74.1) that is pressed flat against and is connected to the second flange (56), an intermediate segment (74.2) that is substantially parallel to the first flange (54), and a second end segment (74.3) that is configured to cooperate with the edge face of the first flange (54) and/or of the second web (62.2) of the L-shaped bracket (62).

7. Aircraft fairing according to one of the preceding claims, **characterized in that** at least one of the first and second flanges (54, 56) is at least partially inserted into the fixed or movable panel (44, 48).

8. Aircraft comprising a fairing according to one of the preceding claims.
